# EUROPEAN PATENT APPLICATION

(11) **EP 4 603 153 A1**
(43) Date of publication of application: **20.08.2025**
(21) Application number: 25150206.8
(22) Date of filing: 03.01.2025
(51) Int. Cl.: A62C 3/16, A62C 35/58, H01M 50/233

(54) **SYSTEM FOR SPRAYING FIRE EXTINGUISHING AGENT**

(30) Priority: 13.02.2024 KR 20240020480
(71) Applicant: SAMSUNG SDI CO., LTD., Yongin-si, Gyeonggi-do 17084 (KR)
(72) Inventor: YOON, Jong Wook, 17084 Yongin-si (KR)
(74) Representative: Marks & Clerk LLP

(57) **Abstract**

A system for spraying a fire-extinguishing agent according to one or more embodiments of the present disclosure includes a main pipe extending in a first direction, and having one end connected to a storage unit for storing a fire-extinguishing agent, a rack pipe branching from the main pipe, and extending in a second direction crossing the first direction, a plurality of branch pipes branching from the rack pipe, and extending in a third direction crossing the second direction, and a plurality of spray pipes respectively branching from the plurality of branch pipes, extending in a fourth direction crossing the third direction, and respectively having therein a plurality of nozzle parts respectively defining spray holes configured to be closed by a cover.

## Description

### BACKGROUND

### 1. Field

The present disclosure relates to a system for spraying a fire-extinguishing agent.

### 2. Description of the Related Art

An energy storage system (ESS), which is a system that stores electrical energy in a battery and that supplies the stored electrical energy if power is desired, has been introduced as an alternative to fossil fuels for reducing greenhouse gas emissions. The desire for ESS is rapidly increasing both domestically and internationally. The ESS is a large-scale facility in which lithium-ion batteries having a high energy density and high efficiency are mainly used, and dozens of modules having dozens of battery cells connected in series and in parallel are stacked in a rack unit.

### SUMMARY

The present disclosure provides a system for spraying a fire-extinguishing agent, which can reduce or minimize the loss of the fire-extinguishing agent.

Embodiments of the present disclosure relate to a system for spraying a fire-extinguishing agent, which reduces or minimizes the loss of a fire-extinguishing agent by allowing the fire-extinguishing agent to move only to a corresponding pipe where an event has occurred.

A system for spraying a fire-extinguishing agent according to one or more embodiments of the present disclosure includes a main pipe extending in a first direction, and having one end connected to a storage unit for storing a fire-extinguishing agent, a rack pipe branching from the main pipe, and extending in a second direction crossing the first direction, a plurality of branch pipes branching from the rack pipe, and extending in a third direction crossing the second direction, and a plurality of spray pipes respectively branching from the plurality of branch pipes, extending in a fourth direction crossing the third direction, and respectively having therein a plurality of nozzle parts respectively defining spray holes configured to be closed by a cover.

The main pipe may include a plurality of pipes, and a plurality of T-shaped connectors coupling the plurality of pipes, arranged in the first direction, wherein an upper end of the rack pipe is coupled to a lower end of one of the plurality of T-shaped connectors, and wherein the system further includes a barrier pipe between the lower end of the one of the plurality of T-shaped connectors and the upper end of the rack pipe, the barrier pipe being configured to transition from a communication-blocked state to a communication-opened state upon a fire-extinguishing agent spray pressure exceeding a threshold value to allow the fire-extinguishing agent to move to the rack pipe.

The system may further include a barrier to maintain an interior of the barrier pipe in the communication-blocked state, and the interior of the barrier pipe transform into the communication-open state when a pressure exceeding the threshold value is applied to the barrier.

The system may further include a plurality of rack shelves arranged in a row, and a pipe communication structure on one of the plurality of rack shelves, including the main pipe, the rack pipe, one of the plurality of branch pipes, and one of the plurality of spray pipes, and each pipe in the plurality of rack shelves are connected to each other so that the fire-extinguishing agent is sequentially supplied inside the pipes.

The rack pipe may be connected to the main pipe through the barrier pipe, wherein the rack pipe is in communication with the one of the plurality of branch pipes and the one of the plurality of spray pipes downstream therefrom, and wherein the barrier pipe that is engaged with the rack pipe to which the one of the plurality of spray pipes corresponding to a battery cell where an event has occurred is connected is configured to transform into the communication-opened state to permit movement of the fire-extinguishing agent to the rack pipe.

The barrier may include a membrane configured to block the interior of the barrier pipe in the communication-blocked state, and a rupture line in the membrane, and configured to rupture upon the fire-extinguishing agent spray pressure applied thereto exceeding the threshold value such that the barrier pipe is brought into the communication-opened state.

The rupture line may include a straight line, a cross, or a circle, wherein the threshold value is about 1.5 bar.

The barrier may be a ball for blocking communication with the interior of the barrier pipe, wherein the system further includes a protrusion at an inner surface of the barrier pipe for limiting separation of the ball from the barrier pipe, and configured to be damaged by the ball upon the fire-extinguishing agent spray pressure applied to the ball exceeding the threshold value to bring the barrier pipe into the communication-opened state.

The barrier pipe may include a circular or polygonal cross-section.

The system may further include a plurality of rack shelves arranged in a row, wherein the plurality of spray pipes cross upper sides of a plurality of battery cells on the plurality of rack shelves, and wherein the plurality of nozzle parts are respectively positioned in the plurality of spray pipes to have a one-to-one correspondence with the battery cells.

The plurality of nozzle parts may be respectively located directly above a safety vent of a corresponding one of the plurality of battery cells.

At least some of the above and other features of the invention are set out in the claims.

### BRIEF DESCRIPTION OF DRAWINGS

FIG. 1 is a conceptual diagram of a system for spraying a fire-extinguishing agent according to one or more embodiments of the present disclosure.
FIG. 2 is a perspective view showing a state in which a pipe communication structure is mounted on a rack shelf in FIG. 1.
FIG. 3 is a partially enlarged view of FIG. 2.
FIG. 4 is a perspective view showing only the pipe communication structure in FIG. 1.
FIG. 5A is a perspective view of a spray pipe coupled to a rack shelf, viewed from above.
FIG. 5B is a perspective view of the spray pipe coupled to a rack shelf, viewed from below.
FIG. 6 is a partial perspective view showing a structure in which a spray pipe and battery cells are arranged.
FIG. 7A is a conceptual diagram of a barrier pipe of a system for spraying a fire-extinguishing agent according to one or more embodiments of the present disclosure.
FIG. 7B is a conceptual diagram of a barrier pipe of a system for spraying a fire-extinguishing agent according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that the present disclosure covers all modifications, equivalents, and replacements within the idea and technical scope of the present disclosure, that each of the features of embodiments of the present disclosure may be combined with each other, in part or in whole, and technically various interlocking and operating are possible, and that each embodiment may be implemented independently of each other, or may be implemented together in an association, unless otherwise stated or implied.

In the drawings, the relative sizes of elements, layers, and regions may be exaggerated for clarity and/or descriptive purposes. Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of' when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5% of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

An energy storage system (ESS) may be a large-scale facility in which lithium-ion batteries having a high energy density and high efficiency are mainly used, and dozens of modules having dozens of battery cells connected in series and in parallel are stacked in a rack unit.

A lithium-ion battery is suitable in terms of high energy density and lightness, but has drawbacks that may threaten the safety of a system because a flammable electrolyte is used, and because the lithium-ion battery may be sensitive to temperatures, may have a considerable reduction in the capacity if over-discharged, and may become very unstable if overcharged, potentially leading to an explosion and fire due to short circuits of internal electrodes or external impacts. For example, to extinguish a fire occurring to a lithium-ion battery, it may be suitable to reduce or prevent the likelihood of continuous reignition through a thermal runaway phenomenon in which heat is rapidly generated if an oxidative positive electrode and a reductive negative electrode meet due to the collapse of a polymer separator. It is similarly suitable to reduce or prevent the likelihood of a fire propagation to adjacent cells.

Conventionally, if thermal runaway occurs in each of the secondary batteries of a rack of an ESS, or if ignition or explosion of a secondary battery occurs, then the secondary battery may be cooled, or a fire may be extinguished, by activating fire-extinguishing equipment. To this end, a system for spraying a fire-extinguishing agent to each cell of the ESS may be constructed. For example, a number of pipes may be interconnected to form a fire-extinguishing agent movement path, which ranges from the storage unit that stores the fire-extinguishing agent to each battery cell. If an event, such as thermal runaway, occurs in a corresponding battery cell, a fire in the cell may be extinguished by starting the injection of the fire-extinguishing agent into the pipes, and by allowing the fire-extinguishing agent to sequentially move to the cell where the event has occurred.

However, the ESS may include numerous cells, and the fire-extinguishing system may include numerous pipes connected to supply and spray a fire-extinguishing agent to the respective cells. For example, a main pipe through which the fire-extinguishing agent is supplied branches off into a plurality of main pipes in a direction in which the fire-extinguishing agent is supplied, a rack pipe is installed in each of the main pipes, a plurality of branch pipes are again installed in the rack pipes, and a plurality of spray pipes are connected to the respective branch pipes. The fire-extinguishing agent may be sprayed to the cells through a plurality of nozzle parts provided in the spray pipes.

However, if thermal runaway occurs in a corresponding cell, to supply the fire-extinguishing agent to the spray pipe where the corresponding cell is installed, a fire-extinguishing agent may be supplied from the storage unit to the main pipe. Conventionally, rather than supplying of a fire-extinguishing agent only to a rack pipe leading to a corresponding cell, the fire-extinguishing agent may leak out to each rack pipe branching off and extending from the main pipe, resulting in the unnecessary loss of the fire-extinguishing agent.

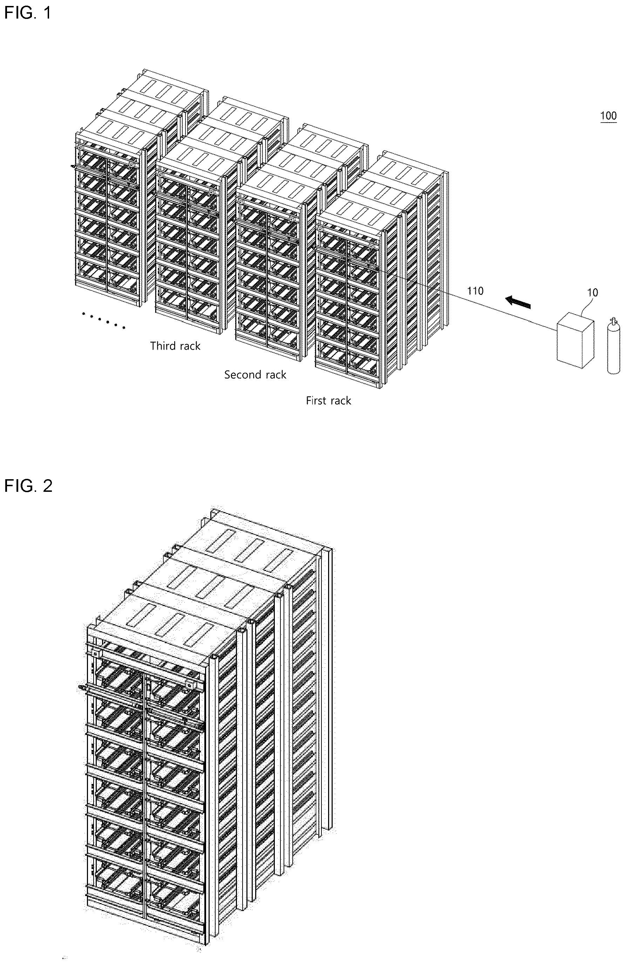

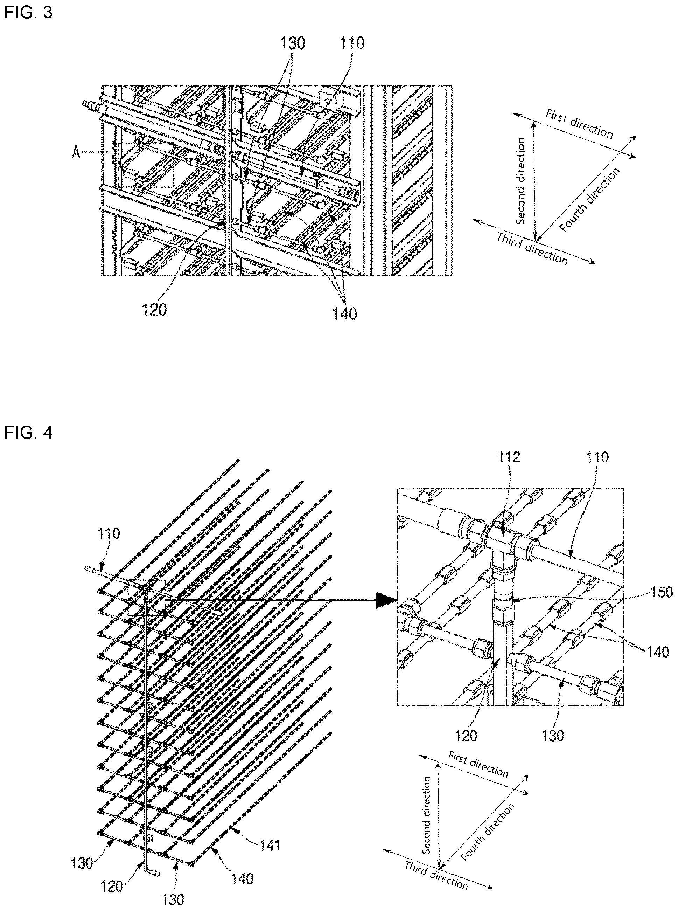

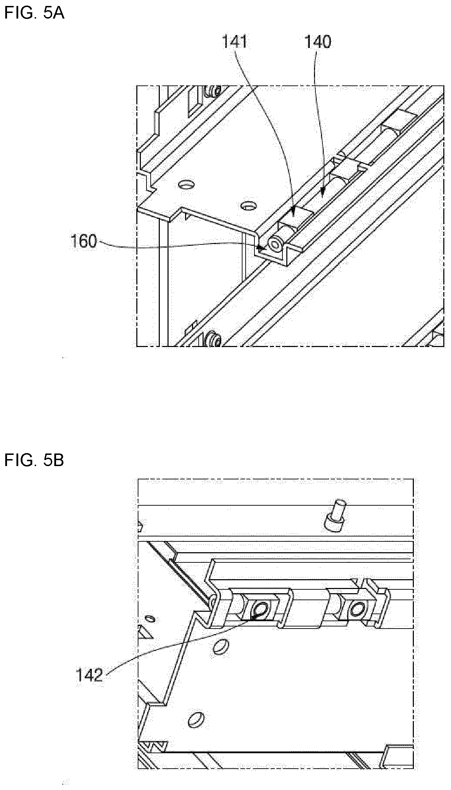

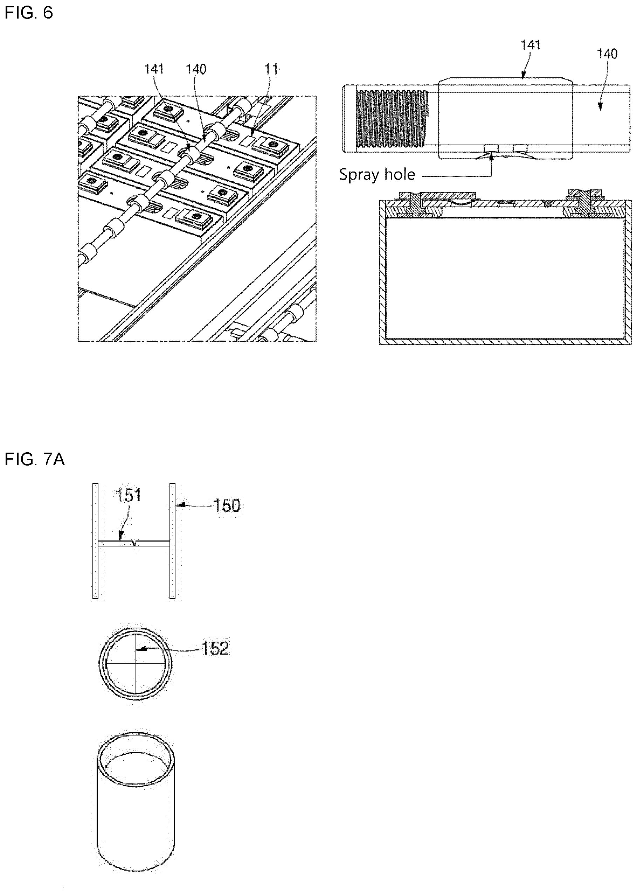

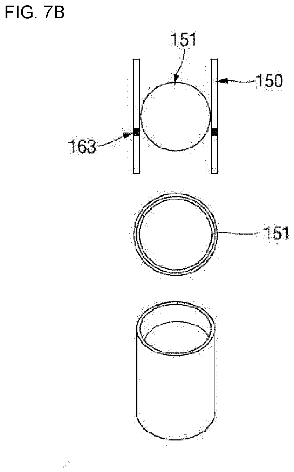

FIG. 1 is a conceptual diagram of a system for spraying a fire-extinguishing agent according to one or more embodiments of the present disclosure, FIG. 2 is a perspective view showing a state in which a pipe communication structure is mounted on a rack shelf in FIG. 1, FIG. 3 is a partially enlarged view of FIG. 2, FIG. 4 is a perspective view showing only the pipe communication structure in FIG. 1, FIG. 5A is a perspective view of a spray pipe coupled to a rack shelf, viewed from above, FIG. 5B is a perspective view of the spray pipe coupled to a rack shelf, viewed from below, FIG. 6 is a partial perspective view showing a structure in which a spray pipe and battery cells are arranged, FIG. 7A is a conceptual diagram of a barrier pipe of the system for spraying a fire-extinguishing agent according to one or more embodiments of the present disclosure, and FIG. 7B is a conceptual diagram of a barrier pipe of a system for spraying a fire-extinguishing agent according to one or more other embodiments of the present disclosure.

The fire-extinguishing-agent-spraying system 100 of the present disclosure includes a storage unit or storage part 10, a rack shelf, and a pipe communication structure installed on the rack shelf.

The storage part 10 is a type of container that stores fire-extinguishing agents, such as water, carbon dioxide, and halogen compounds used to extinguish fires or flames.

A plurality of battery cells 11 are stored in the rack shelf, and one pipe communication structure is installed therein. The pipe communication structure includes a main pipe 110, a rack pipe 120, a plurality of branch pipes 130, and a plurality of spray pipes 140. The pipe communication structure is configured to allow these pipes to be connected to each other so that fire-extinguishing agents sequentially flow inside the pipes.

In one or more embodiments, the fire-extinguishing-agent-spraying system 100 of the present disclosure includes a plurality of rack shelves, and may be configured as a system in which a pipe communication structure is installed on each of the rack shelves. The pipe communication structures may be in communication with each other through connections between the main pipes. The fire-extinguishing-agent-spraying system 100 may include a storage part 10, a plurality of rack shelves arranged in a line, and a pipe communication structure mounted on each of the rack shelves.

The pipe communication structures may be mounted on the respective rack shelves. Each of the pipe communication structures may include the main pipe 110, the rack pipe 120, one of the plurality of branch pipes 130, and one of the plurality of spray pipes 140, as described above. These pipes may be connected to each other to form a structure in which the fire-extinguishing agents flow sequentially.

The main pipe 110 has one end connected to the storage part 10, and is elongated in a first direction. Referring to FIGS. 3 and 4, the main pipe 110 may be connected to a T-shaped connector 112, and may be connected to the rack pipe 120 through the T-shaped connector 112. As an example, the first direction may be a substantially horizontal direction. In one or more embodiments, the main pipe 110 may comprise a plurality of pipes, and a plurality of T-shaped connectors 112 coupling the plurality of pipes, arranged in the first direction.

In one or more embodiments of a system including a plurality of rack shelves, the pipe communication structure provided in each rack shelf may be designed to receive a fire-extinguishing agent from the storage part 10 by connecting the main pipes 110 to be in communication with each other.

In one or more embodiments, the rack pipe 120 branches off from the main pipe 110, and extends in a second direction (e.g., in a downward direction). For example, the T-shaped connector 112 may be coupled to the main pipe 110, the upper end of the rack pipe 120 may be coupled to the lower end of the T-shaped connector 112, and as shown, the second direction may be a downward direction or a direction that is substantially perpendicular to the first direction.

In one or more embodiments, the plurality of branch pipes 130 are arranged up and down in the rack shelf and at intervals from each other in the second direction. Each branch pipe 130 may extend from the rack pipe 120 in a third direction. As shown, the third direction may also be a substantially horizontal direction, and may have an orientation that is substantially parallel to the first direction. By way of example, in FIG. 1, twelve branch pipes 130 may be arranged in one rack shelf, and may be spaced apart from each other in the vertical direction (e.g., in the second direction).

In one or more embodiments, the plurality of spray pipes 140 branch off from the respective branch pipes 130, and extend in a fourth direction. The plurality of spray pipes 140 are arranged at intervals from each other along the third direction and in the respective branch pipes 130. The spray pipes 140 extend in the fourth direction. As shown in FIG. 5A, the spray pipes 140 may be placed in a seated state, and may extend along a pipe accommodation groove 160 provided on each rack shelf. The fourth direction may be a substantially horizontal direction that is substantially perpendicular to the first direction.

Referring to FIGS. 5A, FIG. 5B, and 6, the spray pipes 140 are arranged to cross the upper portions or upper sides of the battery cells 11 mounted on the rack shelf. The plurality of nozzle parts 141 are provided in the spray pipes 140 at intervals (e.g., preset intervals) in the extending direction (e.g., in the fourth direction). The plurality of nozzle parts 141 may be positioned in the spray pipes 140 to have a one-to-one correspondence with the plurality of battery cells 11. In one or more embodiments, the battery cells 11 are arranged adjacent to the respective nozzle parts 141. The battery cells 11 are not directly coupled to the nozzle parts 141, but each of the nozzle parts 141 may be placed directly above a safety vent of a corresponding one of the battery cells 11. For example, each of the nozzle parts 141 includes, or defines, a spray hole 142 in a closed state. The battery cells 11 may be in one-to-one arrangement below the respective nozzle parts 141, so that the nozzle parts 141 and the battery cells 11 are placed in close proximity. For example, the spray hole 142 may be blocked with a cover, which may be a type of film or sheet, the state of which being able to be changed by heat due to thermal runaway of a battery cell 11. If an event occurs in a corresponding battery cell 11, the cover that blocks the spray hole 142 of each of the nozzle parts 141 adjacent to the battery cell 11 may be melted and opened by heat, and a fire-extinguishing agent can be supplied into the battery cell 11.

In one or more embodiments, the present disclosure provides the fire-extinguishing-agent-spraying system 100 that can control a movement path of the fire-extinguishing agent so that the fire-extinguishing agent moves only to a corresponding pipe where the event occurred. The barrier pipe 150 may be installed between the main pipe 110, and the rack pipe 120 that branches off from the main pipe 110. For example, the barrier pipe 150 may be installed between the lower end of the T-shaped connector 112 provided in the main pipe 110 and the upper end of the rack pipe 120, which branches off from the main pipe 110.

The barrier pipe 150 may be configured to maintain a communication-blocked state during normal operation, and may transform into a communication-opened state if the fire-extinguishing agent spray pressure exceeds the threshold value of the barrier pipe 150. For example, the barrier pipe 150 may be configured to rupture at a pressure of about 1 bar or more. As described above, the barrier pipe 150 may be provided in the movement path of the fire-extinguishing agent to selectively allow for a communication state, and may allow only the movement of the fire-extinguishing agent to a corresponding rack pipe 120. The barrier pipe 150 may be configured such that the interior of the barrier pipe 150 transforms into a communication-blocked state by means of a barrier (e.g., a blocking member) 151. The barrier pipe 150 may be configured such that, if the spray pressure applied to the barrier 151 exceeds, for example, 1.5 bar, the interior of the barrier pipe 150 may transform into a communication-opened state. The respective rack pipes 120 may be connected to the main pipe 110 through the barrier pipes 150. The rack pipes 120 may communicate with the branch pipes 130 and the spray pipes 140. Because the barrier pipes 150 may be set to the communication-blocked state by the barrier 151, the main pipe 110 and the rack pipe 120 may be blocked from fluid movement. In one or more embodiments, any one of the barrier pipes 150 may transform into a communication-opened state, and fluid movement may be allowed only through the rack pipe 120 connected to the corresponding barrier pipe 150. In one or more embodiments, as the nozzle part that 140 is adjacent to a corresponding battery cell 11 where the event has occurred is opened, only the barrier pipes 150 to which the rack pipes 120 is connected in communication with the spray pipes 140 transform into a communication-opened state. The barrier pipes 150 corresponding to the remaining rack pipes 120 may be still maintained at the communication-blocked state. As a result, the fire-extinguishing agent may be allowed to move only to the corresponding rack pipe 120 of the corresponding battery cell 11 where the event has occurred.

The barrier pipe 150 may be configured to be opened if the fire-extinguishing agent spray pressure applied thereto exceeds a threshold value (e.g., preset threshold value).

Referring to FIG. 7A or FIG. 7B, in the barrier pipe 150, the upper space of the barrier 151 (e.g., upstream of the barrier 151 within the barrier pipe 150) is connected in communication with the main pipe 110. The lower space of the barrier 151 (e.g., downstream of the barrier 151 within the barrier pipe 150) is connected in communication with the rack pipe 120, the branch pipes 130, and the spray pipes 140. In one or more embodiments, if an event does not occur in a corresponding battery cell 11, the spray hole 142 of the nozzle part 141 connected to the battery cell 11 may remain in a closed state, and gas due to runaway might not be detected by a controller that controls a transfer operation of the fire-extinguishing agent. A command of spraying a fire-extinguishing agent from the storage part 10 is not transmitted, and in this state, the barrier 151 may remain in a communication-blocked state.

If an event does occur in a corresponding battery cell 11, a fire-extinguishing agent may be sprayed from the storage part 10 by the controller. If a cell thermal runaway occurs in a corresponding battery cell 11, among the nozzle parts 141 installed on the spray pipes 140, the nozzle part 141 connected to the battery cell 11 may be melted by the heat of the battery cell 11, and a corresponding nozzle part 141 of the spray pipe 140 may be in communication with the interior of the battery cell 11. In the fire-extinguishing-agent-spraying system of the present disclosure, the controller that controls the transfer operation of the fire-extinguishing agent may start transferring the fire-extinguishing agent by detecting the gas generated during thermal runaway. The fire-extinguishing agent may be sprayed from the storage part 10 to move along pipes. The fire-extinguishing agent spray pressure may be about 3 bar. If the fire-extinguishing agent reaches the tip of the rack pipe 120 through the main pipe 110, the fire-extinguishing agent spray pressure in the rack pipe 120 may be about 1.5 bar.

As described above, a barrier pipe 150 is placed between the main pipe 110 and the rack pipe 120, and if the fire-extinguishing agent spray pressure applied to the barrier pipe 150 exceeds a design rupture pressure of the barrier pipe 150, a membrane of the barrier pipe 150 (FIG. 7A) may rupture, opening the barrier pipe 150. For example, if the rupture pressure of the barrier pipe 150 is designed to be lower than 1.5 bar, the barrier pipe 150 may be opened by the fire-extinguishing agent spray pressure. In one or more embodiments, if the barrier pipe 150 is opened, the fire-extinguishing agent can be introduced into the rack pipe 120, the respective branch pipes 130, and the respective spray pipes 140. Among the spray holes 142 provided in the spray pipes 140, only the spray hole 142 adjacent to the corresponding battery cell 11 is ruptured, and the pressure in the corresponding area becomes relatively low, and the fire-extinguishing agent having passed through the barrier pipe 150 can be intensively introduced into a corresponding spray pipe 140 having a spray hole 142 opened.

The barrier pipe 150 according to embodiments of the present disclosure, in which these functions can be implemented, may be practiced through the following two embodiments, for example. First, FIG. 7A is a conceptual diagram of a barrier pipe 150 of a system for spraying a fire-extinguishing agent according to one or more embodiments of the present disclosure. The barrier 151 of the barrier pipe 150 may be a membrane. The interior of the barrier pipe 150 may be blocked from communication by the membrane. The membrane may be designed in a circular shape, and may be placed in the middle of the barrier pipe 150. In one or more embodiments, a rupture line 152 may be provided on the membrane, and, for example, the rupture line can be formed in such a shape as a straight line, a cross, or a circle. In one or more embodiments, the rupture line 152 may be set to rupture if a pressure (e.g., preset pressure) is applied. For example, if a fire-extinguishing agent spray pressure higher than a critical pressure of about 1.5 bar is applied, the rupture line 152 may be ruptured.

Because only the barrier 151 provided in a corresponding rack pipe 120 transforms into the communication-opened state, the fire-extinguishing agent may flow to the battery cell 11 where an event has occurred through the corresponding rack pipe 120, and can be intensively supplied to the corresponding battery cell 11. The barrier pipe 150 may be modified into various shapes, and, for example, a barrier pipe 150 having a circular or polygonal cross-section can be employed. In one or more embodiments, the membrane can be modified depending on the shape of the barrier pipe 150. Referring to FIG. 7A, the rupture line 152 may be configured in a cross shape, and may be modified into other shapes, such as a straight line or a circle. In one or more embodiments, in consideration of the movement path of the fire-extinguishing agent, it is also possible to form the rupture line 152 at the edge of a circular membrane.

In one or more embodiments, FIG. 7B is a conceptual diagram of a barrier pipe 150 of a system 100 for spraying a fire-extinguishing agent according to one or more other embodiments of the present disclosure. The barrier 151 of the barrier pipe 150 may be a ball (e.g., a spherical member, or a ball member). A protrusion 163 may be provided on the lower inner peripheral surface of the barrier pipe 150 to limit the separation of the ball. The protrusion 163 may reduce or prevent the likelihood of the interior of the barrier pipe 150 being blocked from communication by the ball. If the fire-extinguishing agent spray pressure applied to the ball exceeds the threshold value, the protrusion 163 may be damaged by the ball, and the ball may be separated from the barrier pipe 150 to communicate with the two spaces. The threshold value may be set to about 1.5 bar. If a pressure of about 1.5 bar or more is applied to the ball, the protrusion 163 may be damaged, and only the barrier 151 provided in a corresponding rack pipe 120 transforms into a communication-opened state, and the fire-extinguishing agent may flow downstream through the corresponding rack pipe 120, and may be supplied intensively to a battery cell 11 where the event has occurred.

In one or more embodiments, the barrier pipe 150 may be placed between the main pipe 110 and the T-shaped connector 112. The barrier pipe 150 may be arranged in the substantially horizontal direction, and a protrusion 163 may be provided on the inner peripheral surface of the lateral side of the barrier pipe 150 to limit the separation of the ball, and may reduce or prevent the likelihood of the interior of the barrier pipe 150 being blocked from communication by the ball.

According to this configuration, in the plurality of rack pipes 120, the fire-extinguishing agent may be supplied only to a corresponding battery cell 11 where an event has occurred, and may be suppressed from leaking to the remaining rack pipes 120. There may be an advantage in that the fire-extinguishing agent sprayed to address thermal runaway can be supplied to the battery cell 11 where an event occurs, further improving the fire-extinguishing function. In one or more embodiments, because the loss of fire-extinguishing agent is considerably resolved, there is no need to spray additional fire-extinguishing agent to achieve the same fire-extinguishing effect, which has the advantage of saving fire-extinguishing agent.

As described above, according to one or more embodiments of the present disclosure, because the movement of a fire-extinguishing agent is allowed only through a corresponding pipe in communication with a cell where an event, such as thermal runaway, has occurred, the movement of the fire-extinguishing agent to unnecessary pipes is blocked, which may reduce or minimize the loss of the fire-extinguishing agent.

Although the system for spraying a fire-extinguishing agent according to embodiments of the present disclosure has been described with reference to the drawings, this is merely an example and those of ordinary skill in the art will understand that various modifications may be made therein. Various changes in form and details may be made therein without departing from the scope of the disclosure as defined by the following claims, with functional equivalents thereof to be included therein.

Embodiments are set out in the following clauses:
Clause 1. A system for spraying a fire-extinguishing agent, the system comprising:
   a main pipe extending in a first direction, and having one end connected to a storage unit for storing a fire-extinguishing agent;
   a rack pipe branching from the main pipe, and extending in a second direction crossing the first direction;
   a plurality of branch pipes branching from the rack pipe, and extending in a third direction crossing the second direction; and
   a plurality of spray pipes respectively branching from the plurality of branch pipes, extending in a fourth direction crossing the third direction, and respectively having therein a plurality of nozzle parts respectively defining spray holes configured to be closed by a cover.
Clause 2. The system of clause 1, wherein the main pipe comprises a plurality of pipes, and a plurality of T-shaped connectors coupling the plurality of pipes, arranged in the first direction,
   wherein an upper end of the rack pipe is coupled to a lower end of one of the plurality of T-shaped connectors, and
   wherein the system further comprises a barrier pipe between the lower end of the one of the plurality of T-shaped connectors and the upper end of the rack pipe, the barrier pipe being configured to transition from a communication-blocked state to a communication-opened state upon a fire-extinguishing agent spray pressure exceeding a threshold value to allow the fire-extinguishing agent to move to the rack pipe.
Clause 3. The system of clause 2, further comprising a barrier to maintain an interior of the barrier pipe in the communication-blocked state until a pressure exceeding the threshold value is applied to the barrier.
Clause 4. The system of clause 3, further comprising:
   a plurality of rack shelves arranged in a row; and
   a pipe communication structure on one of the plurality of rack shelves, comprising the main pipe, the rack pipe, one of the plurality of branch pipes, and one of the plurality of spray pipes, and configured to supply the fire-extinguishing agent from the storage unit.
Clause 5. The system of clause 4, wherein the rack pipe is connected to the main pipe through the barrier pipe,
   wherein the rack pipe is in communication with the one of the plurality of branch pipes and the one of the plurality of spray pipes downstream therefrom, and
   wherein the barrier pipe is configured to transform into the communication-opened state to permit movement of the fire-extinguishing agent to the rack pipe corresponding to a battery cell where an event has occurred.
Clause 6. The system of clause 5, wherein the barrier comprises:
   a membrane configured to block the interior of the barrier pipe in the communication-blocked state; and
   a rupture line in the membrane, and configured to rupture upon the fire-extinguishing agent spray pressure applied thereto exceeding the threshold value such that the barrier pipe is brought into the communication-opened state.
Clause 7. The system of clause 6, wherein the rupture line comprises a straight line, a cross, or a circle, and
   wherein the threshold value is about 1.5 bar.
Clause 8. The system of clause 5, wherein the barrier is a ball for blocking communication with the interior of the barrier pipe,
   wherein the system further comprises a protrusion at an inner surface of the barrier pipe for limiting separation of the ball from the barrier pipe, and configured to be damaged by the ball upon the fire-extinguishing agent spray pressure applied to the ball exceeding the threshold value to bring the barrier pipe into the communication-opened state.
Clause 9. The system of any one of clauses 2 to 8, wherein the barrier pipe comprises a circular or polygonal cross-section.
Clause 10. The system of clause 2 or clause 3, further comprising a plurality of rack shelves arranged in a row,
   wherein the plurality of spray pipes cross upper sides of a plurality of battery cells on the rack shelves, and
   wherein the plurality of nozzle parts are respectively positioned in the plurality of spray pipes to have a one-to-one correspondence with the plurality of battery cells.
Clause 11. The system of clause 10, wherein the plurality of nozzle parts are respectively located directly above a safety vent of a corresponding one of the plurality of battery cells.

## Claims

1. A system for spraying a fire-extinguishing agent, the system comprising:
a main pipe extending in a first direction, and having one end connected to a storage unit for storing a fire-extinguishing agent;
a rack pipe branching from the main pipe, and extending in a second direction crossing the first direction;
a plurality of branch pipes branching from the rack pipe, and extending in a third direction crossing the second direction; and
a plurality of spray pipes respectively branching from the plurality of branch pipes, extending in a fourth direction crossing the second direction, and respectively having therein a plurality of nozzle parts respectively defining spray holes configured to be closed by a cover.

2. The system as claimed in claim 1, wherein the main pipe comprises a plurality of pipes, and a plurality of T-shaped connectors coupling the plurality of pipes, arranged in the first direction,
wherein an upper end of the rack pipe is coupled to a lower end of one of the plurality of T-shaped connectors, and
wherein the system further comprises a barrier pipe between the lower end of the one of the plurality of T-shaped connectors and the upper end of the rack pipe, the barrier pipe being configured to transition from a communication-blocked state to a communication-opened state upon a fire-extinguishing agent spray pressure exceeding a threshold value to allow the fire-extinguishing agent to move to the rack pipe.

3. The system as claimed in claim 2, further comprising a barrier to maintain an interior of the barrier pipe in the communication-blocked state, and the interior of the barrier pipe transform into a communication-open state when a pressure exceeding the threshold value is applied to the barrier.

4. The system as claimed in claim 3, further comprising:
a plurality of rack shelves arranged in a row; and
a pipe communication structure on one of the plurality of rack shelves, comprising the main pipe, the rack pipe, one of the plurality of branch pipes, and one of the plurality of spray pipes, and each pipe in the plurality of rack shelves are connected to each other so that the fire-extinguishing agents is sequentially supplied inside the pipes.

5. The system as claimed in claim 4, wherein the rack pipe is connected to the main pipe through the barrier pipe,
wherein the rack pipe is in communication with the one of the plurality of branch pipes and the one of the plurality of spray pipes downstream therefrom, and
wherein the barrier pipe that is engaged with the rack pipe to which the one of the plurality of spray pipes corresponding to a battery cell where an event has occurred is connected is configured to transform into the communication-opened state to permit movement of the fire-extinguishing agent to the rack pipe.

6. The system as claimed in claim 5, wherein the barrier comprises:
a membrane configured to block the interior of the barrier pipe in the communication-blocked state; and
a rupture line in the membrane, and configured to rupture upon the fire-extinguishing agent spray pressure applied thereto exceeding the threshold value such that the barrier pipe is brought into the communication-opened state.

7. The system as claimed in claim 6, wherein the rupture line comprises a straight line, a cross, or a circle, and
wherein the threshold value is about 1.5 bar.

8. The system as claimed in claim 5, wherein the barrier is a ball for blocking communication with the interior of the barrier pipe,
wherein the system further comprises a protrusion at an inner surface of the barrier pipe for limiting separation of the ball from the barrier pipe, and configured to be damaged by the ball upon the fire-extinguishing agent spray pressure applied to the ball exceeding the threshold value to bring the barrier pipe into the communication-opened state.

9. The system as claimed in any one of claims 2 to 8, wherein the barrier pipe comprises a circular or polygonal cross-section.

10. The system as claimed in claim 2 or claim 3, further comprising a plurality of rack shelves arranged in a row,
wherein the plurality of spray pipes cross upper sides of a plurality of battery cells on the rack shelves, and
wherein the plurality of nozzle parts are respectively positioned in the plurality of spray pipes to have a one-to-one correspondence with the plurality of battery cells.

11. The system as claimed in claim 10, wherein the plurality of nozzle parts are respectively located directly above a safety vent of a corresponding one of the plurality of battery cells.
